# EUROPEAN PATENT SPECIFICATION

(11) **EP 3 414 967 B1**
(45) Date of publication and mention of the grant of the patent: **31.05.2023**
(21) Application number: 16708675.0
(22) Date of filing: 08.03.2016
(51) Int. Cl.: H04W 74/00, H04W 84/12, H04W 72/23, H04W 72/21

(54) **CLIENT AND ACCESS POINT COMMUNICATION DEVICES ALLOCATING INDICATED PORTION OF UPLINK FRAME FOR MULTIPLE TYPES OF CONTROL DATA**
CLIENT- UND ZUGANGSPUNKT-KOMMUNIKATIONSVORRICHTUNGEN, DIE DEN ANGEGEBENEN TEIL DES AUFWÄRTSVERBINDUNGSRAHMENS FÜR MEHRERE ARTEN VON STEUERDATEN ZUWEISEN
DISPOSITIFS DE COMMUNICATION DE CLIENT ET DE POINT D'ACCÈS ATTRIBUANT UNE PARTIE INDIQUÉE D'UNE TRAME DE LIAISON MONTANTE POUR DE MULTIPLES TYPES DE DONNÉES DE COMMANDE

(43) Date of publication of application: 19.12.2018
(73) Proprietor: Huawei Technologies Co., Ltd., Longgang District Shenzhen, Guangdong 518129 (CN)
(72) Inventor: TSODIK, Genadiy, 80992 Munich (DE); SHILO, Shimi, 80992 Munich (DE); EZRI, Doron, 80992 Munich (DE); WEITZMAN, Avi, 80992 Munich (DE); ZHANG, Jiayin, 80992 Munich (DE)
(74) Representative: Gill Jennings & Every LLP
(86) International application number: PCT/EP2016/054947
(87) International publication number: WO 2017/152962

(56) References cited:
- WO-A1-2016/032302
- WO-A1-2016/032302
- WO-A2-2016/028125
- WO-A2-2016/028125
- CA-A1- 2 958 756
- US-A1- 2013 301 605
- US-A1- 2013 301 605
- US-A1- 2016 050 659
- US-A1- 2016 050 659

## Description

### TECHNICAL FIELD

The present disclosure relates to client and access point communication devices allocating indicated portion of time-frequency resources for uplink transmission of a particular type of control data, in particular for flexible control allocation (FCA) in 802.11ax communications.

### BACKGROUND

Many control mechanisms in WiFi communication networks require only a single bit (like yes/no confirmation) or very few bits to send. The existing standards require a data payload transmission for different types of control signals. The upcoming 802.11ax WiFi standard introduces an OFDMA technology which will support a much larger number of stations (STAs) compared with previous standards. Thus control mechanisms require a high overhead and need to be implemented more efficiently to allow a reasonable network throughput.

US 2013/301605 A1 discloses a method, an apparatus, and computer program product for resource allocation for sequential/parallel wireless messages.

WO 2016/028125 A2 discloses a method for uplink transmission in wireless communication system and apparatus therefor.

WO 2016/032302 A1 discloses a method and a device by which station transmit signal in wireless communication system.

US 2016/050659 relates to rate determination in high efficiency wireless LAN. CA2958756C relates to method for uplink transmission in wireless communication system and apparatus therefor.

### SUMMARY

It is the object of the disclosure to provide an efficient control mechanism for WiFi communication networks to allow a reasonable network throughput.

The invention has been defined in the independent claims. Further specific technical features have been defined in the dependent claims.

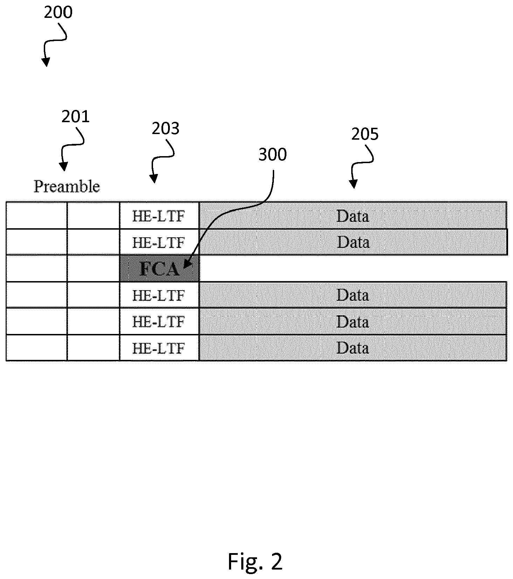

A basic idea of the disclosure is to incorporate the control signal into a regular UL frame where some of the resources are dedicated for the different types of control signals, whereas the rest are dedicated for a regular data transmission (if it exists). The control signal may be transmitted within the HE-LTF portion 203 of UL frame 200 as depicted in Figure 2. An UL frame can include multiple number of flexible control allocations (FCAs) where each one can be allocated for a different type of control data. Different types of control data can be implemented without data payload transmission, simultaneously, within the same frame. The novel control signal also supports contention-based random access for both associated and non-associated stations.

The devices described herein may be applied in 802.11 ax systems. In 802.11 ax standard development, control mechanisms, like random access (RA), acknowledgment (ACK), association request etc., are applied immediately after a trigger frame (TF) that is transmitted by the access point (AP), also referred hereinafter as "access point type communication device". Thus the stations (STAs), also referred hereinafter as "client type communication devices", wait for the AP to trigger them. A Trigger Frame may be followed by one or more uplink (UL) frames, where each frame comprises a control signal transmitted by one or more STAs.

The devices described herein may perform random access procedures. Random access (RA) is a procedure that allows client type communication devices to request from an access point (AP) type communication device resources for transmission by use of a resource request and by another procedure to initiate an association procedure with the AP. In other words, this mechanism is usually applied by the client type communication devices that need to request the resources. The client type communication devices can achieve an association with a specific AP. Currently, in the 802.11ax standard, RA is applied immediately after a trigger frame (TF), which is transmitted by the AP. Thus the client type communication devices wait for AP to trigger them (indicate the existence of a random access opportunity). A TF frame may be followed by several RA opportunities. Within each opportunity, clients can try to access the channel. For doing so they contend with each other.

The devices described herein may be configured to communicate using MAC based RA. In this technique, the RA is transmitted as regular data, including payload, where each client allocates its transmission within a single resource unit (RU) as defined in 802.11ax. A RU is defined as a set of continuous subcarriers, e.g. 26, over some period of time. The AP can decide to provide more than one RA frame triggered by a single TF. The specific frame and the RU within the frame can be chosen in a random way by each client type communication device. No distinguishing between the non-associated client type communication devices and associated client type communication devices is introduced and all the client type communication devices that try to transmit an RA, are allowed to choose any time/frequency resources allocated for the current RA opportunity. A random access block typically comprises a plurality of frequency subcarriers and a plurality of time slots. A frequency section comprises at least one such frequency subcarrier but typically a plurality of neighboring (the spacing between two neighboring frequency subcarriers depends on what is defined by the underlying communication system) frequency subcarriers.

The devices described herein may be configured to to communicate using PHY based RA. PHY based RA is transmitted as PHY signaling and does not include any higher layer (MAC or above) payload. Several communication techniques regarding PHY based RA, where the RA data is a simple PHY signaling that informs the AP that a specific client type communication device wants resources, are available. The RA data is thus very short and allows a higher number of client type communication devices to be allocated within a single RA frame.

The devices described herein may be configured to transmit and/or receive radio signals. Radio signals may be or may include radio frequency signals radiated by a radio transmitting device (or radio transmitter or sender) with a radio carrier frequency lying in a range of about 3 Hz to 300 GHz. The frequency range may correspond to frequencies of alternating current electrical signals used to produce and detect radio waves.

The devices described herein may be applied in OFDM and OFDMA systems. OFDM and OFDMA are schemes for encoding digital data on multiple carrier frequencies. A large number of closely spaced orthogonal sub-carrier signals may be used to carry data. Due to the orthogonality of the sub-carriers crosstalk between sub-carriers may be suppressed.

In order to describe the disclosure in detail, the following terms, abbreviations and notations will be used:
- STA:: Station, also referred to as client type communication device
- AP:: Access Point, also referred to as access point type communication device
- OFDM:: Orthogonal Frequency Division Multiplexing
- OFDMA:: Orthogonal Frequency Division Multiple Access
- TF:: Trigger Frame
- RA:: Random Access
- ACK:: Acknowledgement
- NACK:: Non-Acknowledgement
- UL:: Uplink
- DL:: Downlink
- PHY:: Physical layer (device)
- FCA:: Flexible Control Allocation
- HE-LTF:: High Efficiency Long Training Field
- MIMO:: Multiple Input Multiple Output
- MU-MIMO:: Multi User MIMO
- MU:: Multi User
- SU:: Single User

According to a first aspect, the disclosure relates to a client type communication device for communicating with an access point type communication device, the client type communication device comprising: a transceiver unit, configured to receive a trigger frame from the access point type communication device, the trigger frame indicating a particular portion of time-frequency resources of an uplink frame to be allocated by the client type communication device for uplink transmission of multiple types of control data; and a control unit, configured to allocate the indicated portion of time-frequency resources of the uplink frame for uplink transmission of the multiple types of control data, wherein the transceiver unit is configured to transmit the uplink frame comprising the multiple types of control data to the access point type communication device, wherein a particular type of control data (300) includes:
information indicating an index (301) of the allocated time-frequency resources, information indicating a number of bits (305) transmitted within the particular type of control data (300) and information indicating the particular type (303).

In some implementation, MAC level produces different types of data (control and regular) and PHY transmits them in a manner configured by MAC level. So, in some implementations there is no division for regular unit and control unit. Therefore, the control unit can be a part of MAC level or can be implemented as a part of the regular unit of MAC level, In other implementations, the control unit can be a part of PHY.

This provides the advantage that by indicating a particular portion of time-frequency resources of an uplink frame to be allocated by the client type communication device for uplink transmission of multiple types of control data, short control signals can be transmitted at PHY layer without the need to use higher layer signaling with their inherent signaling overhead. By indicating multiple types of control data, different types of control data can be efficiently transmitted over the PHY layer. Hence, this structure saves time and makes the communication more efficient.

In a first possible implementation form of the client type communication device according to the first aspect, the particular portion of time-frequency resources of the uplink frame is a portion allocated for a High Efficiency Long Training Field (HE-LTF). This provides the advantage that the HE-LTF field exists in the uplink frame and can be applied by sending control data types. The AP can give the HE-LFT field a different interpretation for control data transmission at PHY layer. This makes communication highly efficient saving transmission time and resources.

In a second possible implementation form of the client type communication device according to the first aspect as such or according to the first implementation form of the first aspect, the trigger frame indicates multiple portions of the time-frequency resources to be allocated for uplink transmission of different types of control data; and the control unit is configured to allocate the indicated multiple portions of the time-frequency resources for uplink transmission of the different types of control data.

This provides the advantage that multiple portions of the time-frequency resources can be allocated for transmission of different control data types. Such implementation is quite flexible and open for changes in future standards.

In a third possible implementation form of the client type communication device according to the first aspect as such or according to any one of the preceding implementation forms of the first aspect, the particular type of control data further includes at least one of: information indicating single or multiple user transmission, and information indicating contention based or non-contention based allocation of the time-frequency resources.

This provides the advantage that complex control data fields can be flexibly transmitted, thereby saving time and resources while increasing degrees of design flexibility.

In a fourth possible implementation form of the client type communication device according to the first aspect as such or according to any one of the preceding implementation forms of the first aspect, the transceiver unit is configured to receive a second trigger frame indicating a particular portion of time-frequency resources of a second uplink frame to be allocated by the client type communication device for uplink transmission of a particular type of control data.

This provides the advantage that for each trigger frame a different kind of transmission of control data at PHY layer can be used. Such a device offers very flexible communication. In a fifth possible implementation form of the client type communication device according to the fourth implementation form of the first aspect, the particular portion of time-frequency resources of the second uplink frame is different from the particular portion of time-frequency resources of the uplink frame.

This provides the advantage that each transmission of control data may be independent from a previous or next transmission by using different time-frequency resources for transmission, i.e. the communication is highly flexible.

In a sixth possible implementation form of the client type communication device according to any one of the fourth or fifth implementation forms of the first aspect, the particular type of control data of the second uplink frame is different from the particular type of control data of the uplink frame.

This provides the advantage that each transmission of control data may be independent from a previous or next transmission by using different type of control data transmission, i.e. the communication is highly flexible.

In a seventh possible implementation form of the client type communication device according to the first aspect as such or according to any one of the preceding implementation forms of the first aspect, a frame structure of the uplink frame is according to an OFDMA technology, in particular according to a WiFi 802.11ax standard.

This provides the advantage that such device is compatible with the existing OFDMA technology and the WiFi standard and thus can be easily implemented.

Aspects of the disclosure as described above allow to combine different control signal within the same frame and also to combine between regular data and control signals.

The following advantages can be provided: Short control signal (one or few bits) can be transmitted in PHY based manner. Different types of control signals can be mixed together within the same frame, simultaneously. AP can inform in the TF which frequency resources are allocated for each type of control data (this is referred hereinafter as "flexible control allocation (FCA)"). The exact division of the resources can vary in time. Depending on the control data type there can be different format of transmission which can be indicated by the AP within the TF. A regular 802.11ax data transmission can be combined with any type of control signal. For some types of control data a mapping method between STA and time/frequency resources can vary for every control signal. A specific mapping method can be signaled by AP per control allocation. Devices and methods as described above allow efficient transmission of different type of control signals; provide more flexible scheduling mechanisms and allow better utilization of network resources; reduce the total time period to complete a control procedure; and allow to adjust a control transmission manner to a network requirements.

### BRIEF DESCRIPTION OF THE DRAWINGS

Further implementations of the disclosure will be described with respect to the following figures, in which:
Fig. 1 shows a block diagram of a communication system 100 according to an implementation form including a client type communication device 110 according to an implementation form and an access point communication device according to an implementation form;
Fig. 2 shows a schematic diagram illustrating an exemplary uplink frame 200 including a particular type of control data 300 according to an implementation form;
Fig. 3 shows a schematic diagram illustrating an exemplary structure of an FCA (flexible control allocation) block as an example for the particular type of control data 300;
Fig. 4 shows a schematic diagram illustrating the FCA block 300 including different types of control data 401, 402, 403, 404, 405 according to an implementation form;
Fig. 5 shows a schematic diagram illustrating an exemplary single user acknowledgement transmission using an exemplary uplink FCA frame 200a according to an implementation form;
Fig. 6 shows a schematic diagram illustrating an exemplary multi user acknowledgement transmission using an exemplary uplink FCA frame 200b according to an implementation form;
Figs. 7a and 7b show performance diagrams 700a, 700b illustrating random access duration times for different random access procedures;
Fig. 8 shows a schematic diagram illustrating a method 800 for communicating with an access point type communication device according to an implementation form; and
Fig. 9 shows a schematic diagram illustrating a method 900 for communicating with a client type communication device according to an implementation form.

### DETAILED DESCRIPTION OF THE IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

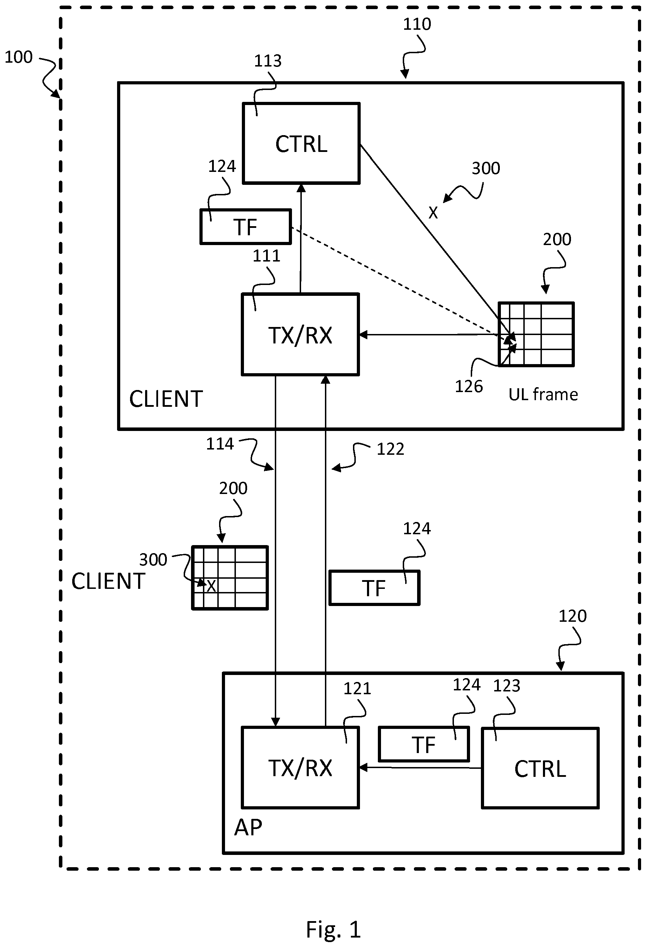

Fig. 1 shows a block diagram of a communication system 100 according to an implementation form including a client type communication device 110 according to an implementation form and an access point communication device according to an implementation form.

The communication system 100 includes a client type communication device 110, e.g. a station, in particular a WiFi station (e.g. according to 802.11ax) and an access point (AP) communication device 120, e.g. an access point, in particular a WiFi AP or hot spot. Client type communication device 110 and AP type communication device may be coupled by a communication channel for transmission of downlink frames and trigger frames 124 from AP communication device 120 to client type communication device 110 and for transmission of uplink frames 200 from client type communication device 110 to AP communication device 120.

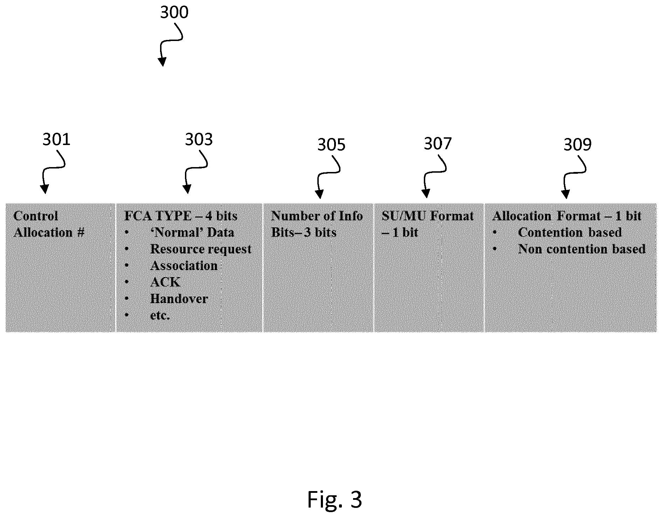

The client type communication device 110 may be used for communicating with the access point type communication device 120. The client type communication device 110 includes a transceiver unit 111 and a control unit 113. The transceiver unit 111 is configured to receive 122 a trigger frame 124 from the access point type communication device 120. The trigger frame 124 indicates a particular portion 126 of time-frequency resources of an uplink frame 200 to be allocated by the client type communication device 110 for uplink transmission of multiple types of control data 300. The particular portion 126 of time-frequency resources of the uplink frame 200 may be known or predetermined by the AP communication device 120 which may control the communication process. The particular portion 126 of time-frequency resources of the uplink frame 200 may be located in at a specific time-frequency block or may be distributed over the UL whole frame, in particular distributed over a preamble or control data section of the UL frame as described below with respect to Fig. 2. The control unit 113 is configured to allocate the indicated portion 126 of time-frequency resources of the uplink frame 200 for uplink transmission of the multiple types of control data 300. The multiple types of control data 300 may be a bit field, e.g. as described below with respect to Fig. 3. The multiple types of control data 300 may include a flexible control block (FCB) 300, e.g. as described below with respect to Figures 2, 3 and 4. The transceiver unit 111 is configured to transmit 114 the uplink frame 200 comprising the multiple types of control data 300 to the access point type communication device 120.

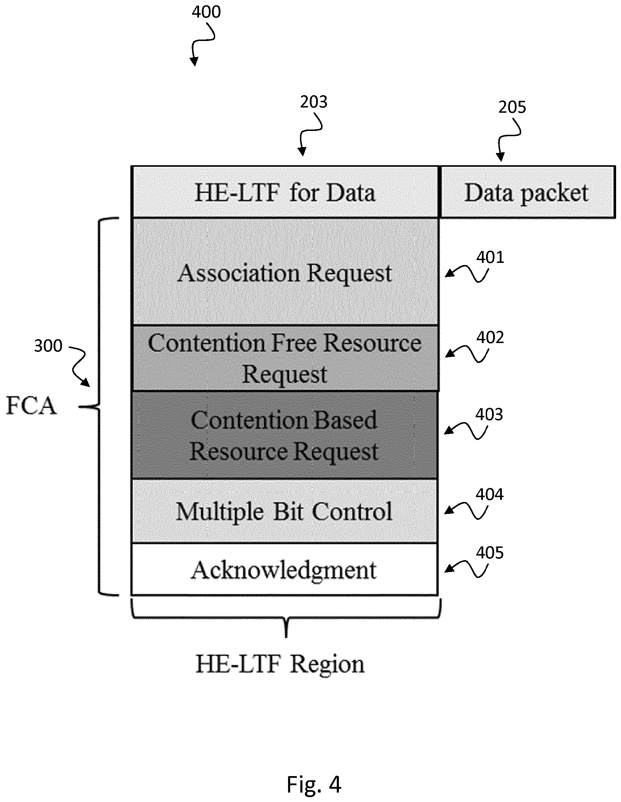

The particular portion 126 of time-frequency resources of the uplink frame 200 may be a portion 203 allocated for a High Efficiency Long Training Field (HE-LTF), e.g. as described below with respect to Figures 2, 3 and 4. The trigger frame 124 may indicate multiple portions 126 of the time-frequency resources, each portion to be allocated for uplink transmission of a particular type of control data 300, e.g. as described below with respect to Figure 4. The control unit 113 may be configured to allocate the indicated multiple portions 126 of the time-frequency resources for uplink transmission of the particular types of control data 300. The trigger frame 124 may indicate multiple portions 126 of the time-frequency resources to be allocated for uplink transmission of different types of control data 401, 402, 403, 404, 405, e.g. as described below with respect to Figure 4. The control unit 113 may be configured to allocate the indicated multiple portions 126 of the time-frequency resources for uplink transmission of the different types of control data 401, 402, 403, 404, 405.

The particular type of control data 300 includes information indicating an index 301 of the allocated time-frequency resources, e.g. as described below with respect to Figure 3. The particular type of control data 300 includes information indicating the particular type 303, e.g. as described below with respect to Figure 3. The particular type of control data 300 includes information indicating a number of bits 305 transmitted within the particular type of control data 300, e.g. as described below with respect to Figure 3. The particular type of control data 300 may include information indicating single or multiple user transmission 307, e.g. as described below with respect to Figures 3, 5 and 6. The particular type of control data 300 may include information indicating contention based or non-contention based allocation 309 of the time-frequency resources, e.g. as described below with respect to Figure 3.

The transceiver unit 111 may be configured to receive a second trigger frame, e.g. having the same structure as the trigger frame 124 described above, indicating a particular portion of time-frequency resources of a second uplink frame to be allocated by the client type communication device 110 for uplink transmission of a particular type of control data. The particular portion of time-frequency resources of the second uplink frame may be a same or a different portion as the particular portion of time-frequency resources of the (first) uplink frame 200. The particular type of control data of the second uplink frame may be a same type or a different type as the particular type of control data of the (first) uplink frame.

The particular portion of time-frequency resources of the second uplink frame may be different from the particular portion 126 of time-frequency resources of the uplink frame 200. The particular type of control data of the second uplink frame may be different from the particular type of control data 300 of the uplink frame 200.

A frame structure of the uplink frame 200 may be according to an OFDMA technology, in particular according to a WiFi 802.11ax standard. The uplink frame 200 may be a random access (RA) frame comprising the particular type of control data 300, e.g. as depicted in Fig. 2.

In one implementation of the client type communication device 110, the transceiver unit 111 is configured to receive 122 a trigger frame 124 from the access point type communication device 120, the trigger frame 124 indicating a particular portion 126 of time-frequency resources of an uplink frame 200 to be allocated by the client type communication device 110 for uplink transmission of multiple types of control data 300, wherein one type of the multiple types of control data 300 indicates a contention-based or non-contention-based allocation 309 of the time-frequency resources. In this implementation, the control unit 113 is configured to allocate the indicated portion 126 of time-frequency resources of the uplink frame 200 for uplink transmission of the multiple types of control data 300 as indicated by the one type in a contention-based or non-contention-based manner and the transceiver unit 111 is configured to transmit 114 the uplink frame 200 comprising the multiple types of control data 300 to the access point type communication device 120.

The access point (AP) type communication device 120 is used for communicating with the client point type communication device 110. The access point type communication device 120 includes a control unit 123 and a transceiver unit 121. The control unit 123 is configured to generate the trigger frame 124 described above. The TF indicates at least one particular portion, e.g. the particular portion 126 as described above, of time-frequency resources of the uplink frame 200 to be allocated by the client type communication device 110 for uplink transmission of at least one particular type of control data, e.g. the particular type of control data 300 as described above.

The transceiver unit 121 is configured to transmit 122 the trigger frame 124 to the client type communication device 110; and to receive 114 the uplink frame 200 comprising the at least one particular type of control data 300 from the client type communication device 110.

The at least one particular portion 126 of time-frequency resources of the uplink frame 200 may be at least one portion 203 allocated for a High Efficiency Long Training Field (HE-LTF), e.g. as described below with respect to Figures 2 to 4.

The trigger frame 124 may indicate multiple portions 126 of the time-frequency resources to be allocated for uplink transmission of different types of control data 401, 402, 403, 404, 405, e.g. as described below with respect to Fig. 4.

The at least one particular type of control data 300 includes: information indicating an index 301 of the allocated time-frequency resources, information indicating the particular type 303, information indicating a number of bits 305 transmitted within the at least one particular type of control data 300, and may further include information indicating single or multiple user transmission 307, and information indicating contention based or non-contention based allocation 309 of the time-frequency resources, e.g. as described below with respect to Fig. 3.

The control unit 123 may be configured to generate a second trigger frame indicating at least one second particular portion of time-frequency resources of a second uplink frame to be allocated by the client type communication device 110 for uplink transmission of at least one second particular type of control data. The transceiver unit 121 may be configured to transmit the second trigger frame to the client type communication device 110 and configured to receive the second uplink frame comprising the at least one second particular type of control data from the client type communication device 110.

Fig. 2 shows a schematic diagram illustrating an exemplary uplink frame 200 including a particular type of control data 300 according to an implementation form. The UL frame 200 includes a preamble 201, a HE-LTF field 203 that may be part of the preamble 201 and a data field 205. The preamble 201, the HE-LTF field 203 and the data field 205 are partitioned in multiple data or control fields that are defined over time-frequency resources, e.g. as defined according to OFDMA, in particular WiFi 802.11ax. Horizontal axis depicts time or slot or symbols; vertical axis depicts frequency or frequency subcarriers.

Each assigned STA may transmit a PHY signal to indicate positive data and avoid a transmission to indicate a negative data. If control signal is defined by a single bit and more than a single HE-LTF symbol is allocated for a transmission of the control data, the same PHY signal may be repeated in every OFDM symbol. If control signal is defined by multiple bits, then different bits may be transmitted in different HE-LTF symbols. For example, if a STA needs to transmit a sequence of two bits then first OFDM symbol will include a PHY signal to indicate 1 and the second OFDM symbol will include no PHY signal to indicate 0.

Fig. 3 shows a schematic diagram illustrating an exemplary structure of an FCA (flexible control allocation) block as an example for the particular type of control data 300.

The particular type of control data 300 shown in Fig. 3 includes information indicating an index 301 of the allocated time-frequency resources, information indicating the particular type 303, information indicating a number of bits 305 transmitted within the particular type of control data 300, information indicating single or multiple user transmission 307, and information indicating contention based or non-contention based allocation 309 of the time-frequency resources.

Different control signals that can be mixed within the same frame require a different number of bits to be transmitted and a different interpretation of a transmitted data. Thus the special structure 300 depicted in Fig. 3 is defined that may be transmitted within the TF per control allocation. The structure 300 includes the following elements: Control allocation # 301, that is an index of the control allocation; FCA Type, that is a type of control data to be transmitted in this specific control allocation; Number of info bits, that is a number of control data bits to be transmitted by each STA within this control allocation; SU/MU Format, that is Single user/Multiple User indication to define a structure of the PHY signal to be applied; and Allocation Format, that is an assignment method which defines a mapping between the assigned STAs and time/frequency resources within each control allocation. In addition AP may inform which STA should transmit within each control allocation.

The Allocation format 309 may indicate Non-Contention based allocation or Contention based allocation. The Non-Contention based type of assignment implies one-to-one mapping between STA and time/frequency resources within the control frame. The mapping is based on the STA ID and can differ in time. The exact mapping method can be defined by AP per control allocation. For example, AP can define the range of IDs that can transmit within current frame, while the lowest ID should occupy the first allocated resource and the highest ID should occupy the last allocated resource. Another option is a direct mapping between ID and resource where AP indicates each assigned STA on which resources are available for it. The number of assigned STAs should be equal to a number of allocated resources. This type of allocation implies zero collision probability between different STAs.

The Contention based type of assignment allows all the assigned STAs to choose randomly one resource among all the available resources within current control allocation. The number of assigned STA can differ from number of the allocated resources (less, equal or more). This type of allocation allows a collision between the assigned STAs, i.e. more than one STA can choose the resources to transmit on.

Fig. 4 shows a schematic diagram illustrating the FCA block 300 including different types of control data 401, 402, 403, 404, 405 according to an implementation form.

Different types of control data may be combined as shown in Fig. 4. The different types of control signal can be transmitted simultaneously within the same UL frame. The division may be done in frequency with no overlap as depicted in Fig. 4. The AP may inform within the TF regarding each allocated control signal. The types of control signal to be transmitted, the size of each control allocation and an exact format within the allocation can vary and may also be indicated in the TF. Moreover, an assignment of STA to a control allocation may also be indicated within TF. The AP can decide based on the network conditions which size of allocation is mostly suitable for current system requirements, and how many time and frequency resource should be allocated for each control signal.

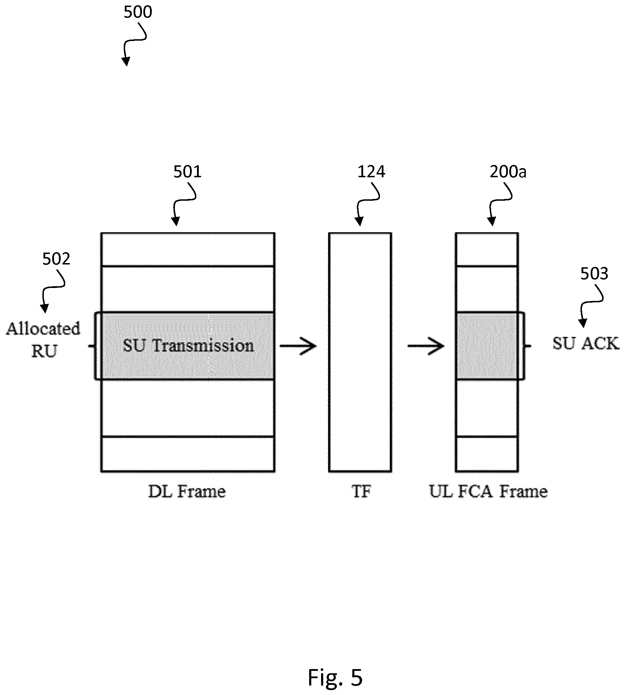

Fig. 5 shows a schematic diagram illustrating an exemplary single user acknowledgement transmission using an exemplary uplink FCA frame 200a according to an implementation form. A DL frame 501 including allocated RU 502 for single user transmission is transmitted from AP 120 to client 110. Then a trigger frame 124 is transmitted in downlink which is answered by client 110 with an UL FCA frame 200a including single-user (SU) ACK 503 or NACK.

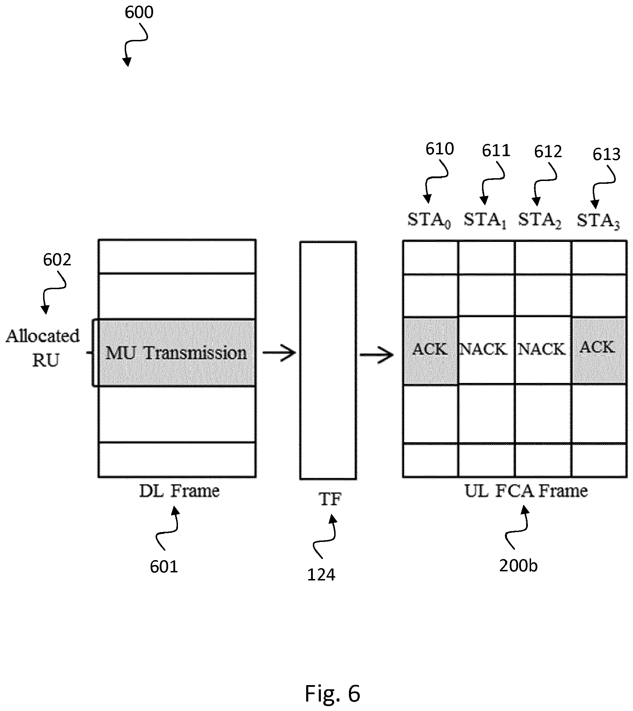

Fig. 6 shows a schematic diagram illustrating an exemplary multi user acknowledgement transmission using an exemplary uplink FCA frame 200b according to an implementation form. A DL frame 601 including allocated RU 602 for multi user (MU) transmission is transmitted from AP 120 to client 110. Then a trigger frame 124 is transmitted in downlink direction which is answered by multiple clients 110, i.e. 610, 611, 612, 613 with an UL FCA frame 200b including multi-user (MU) ACK or NACK.

With respect to resource request, if an FCA resource is allocated for Resource Request, the STA may use it to inform AP that a resource slot is required for data transmission. AP can choose to assign an allocation for the specific STAs or allow many STAs to try to contend the FCA resources (allocation format).

With respect to association request, each STA that wants to be associated with the AP can use FCA resources if association request is indicated in TF. In this case the STA chooses randomly the available contention-based resource to transmit a simple indication (1-bit flag to indicate the request). AP replies and allocates for a STA that sent a specific accusation request an allocation for data transmission. The further exchange of data will complete the association procedure. Format field is irrelevant for this type of feedback and can be reserved for the future usage.

With respect to Acknowledgement, a simple yes/no ACK can be easily implemented using FCA. Each STA is required to transmit within the same resources that were allocated for Downlink (DL) transmission (unless indicated otherwise in TF). If DL 501 was transmitted in single-user format 500 the STA should transmit an HE-LTF signal in a regular mode as ACK 503 (or not transmit for NACK). If MU-MIMO mode 600 was applied for DL 601, each STA 610, 611, 612, 613 should transmit MU-MIMO HE-LTF with indexing similar to DL (i.e. STA that received a first stream should use the first resource).

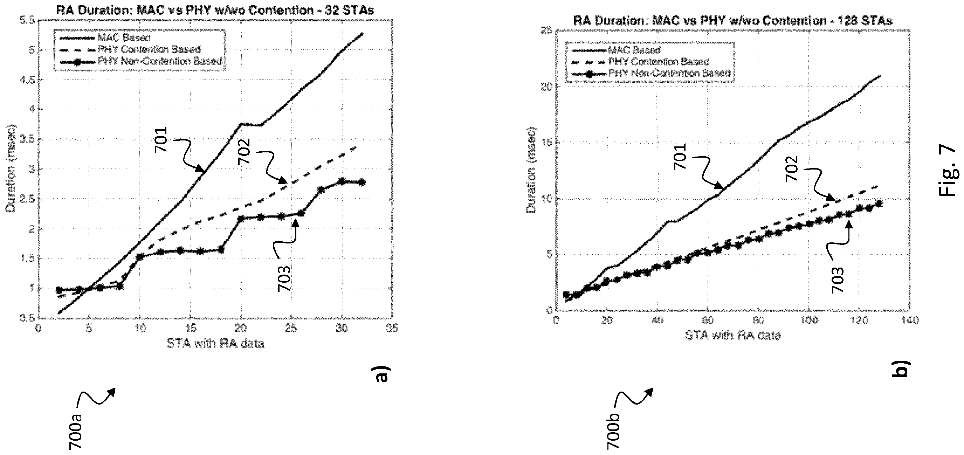

Figs. 7a and 7b show performance diagrams 700a, 700b illustrating random access duration times for different random access procedures. The graphs 701 illustrate the MAC based performance, the graphs 702 the PHY contention based performance and the graphs 703 the PHY non-contention based performance.

By choosing the right parameters the system efficiency can be significantly improved. Figs. 7a and 7b are examples of random access procedure. The increased number of supported associated clients which transmit within the same frame leads to a shorter time period required to complete a RA procedure. Fig. 7a and 7b show the simulation results for the scenarios of 32 (Fig. 7a) and 128 (Fig. 7b) associated clients. It exhibits a gain of several milliseconds of time duration reduction compared to other methods. Figs. 7a and 7b also illustrate a comparison between contention 702 and non-contention 703 based allocation format and show the benefits of each format type for different number of STAs.

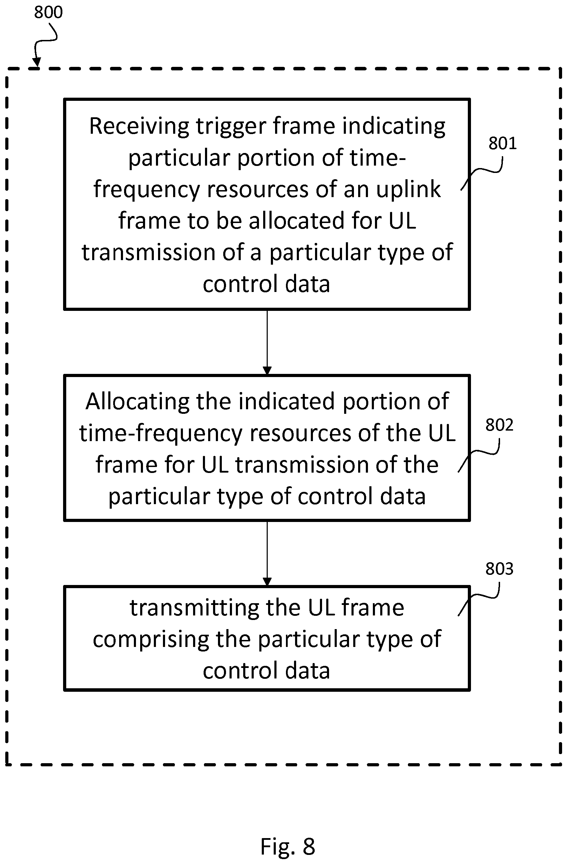

Fig. 8 shows a schematic diagram illustrating a method 800 for communicating with an access point type communication device according to an implementation form.

The method 800 includes: receiving 801 a trigger frame from the access point type communication device, the trigger frame indicating a particular portion of time-frequency resources of an uplink frame to be allocated by a client type communication device for uplink transmission of multiple types of control data; allocating 802 the indicated portion of time-frequency resources of the uplink frame for uplink transmission of the multiple types of control data; and transmitting 803 the uplink frame comprising the multiple types of control data to the access point type communication device.

The trigger frame may be structured according to the description above with respect to Figures 1 to 6. The particular portion of time-frequency resources of the uplink frame may be according to the description above with respect to Figures 1 to 6. The multiple types of control data may be according to the description above with respect to Figures 1 to 6.

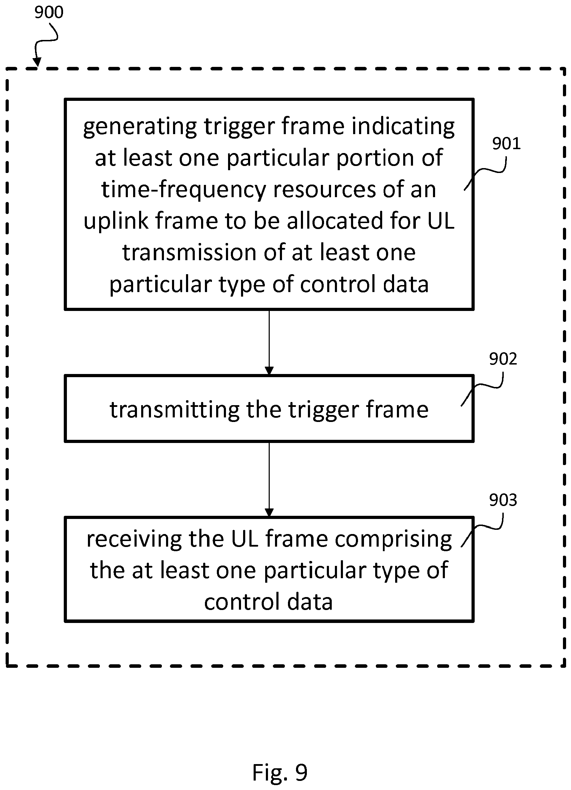

Fig. 9 shows a schematic diagram illustrating a method 900 for communicating with a client type communication device according to an implementation form.

The method 900 includes: generating 901 a trigger frame indicating at least one particular portion of time-frequency resources of an uplink frame to be allocated by the client type communication device for uplink transmission of at least one particular type of control data; transmitting 902 the trigger frame to the client type communication device; and receiving 903 the uplink frame comprising the at least one particular type of control data from the client type communication device.

The trigger frame may be structured according to the description above with respect to Figures 1 to 6. The at least one particular portion of time-frequency resources of the uplink frame may be according to the description above with respect to Figures 1 to 6. The at least one particular type of control data may be according to the description above with respect to Figures 1 to 6.

The present disclosure also supports a computer program product including computer executable code or computer executable instructions that, when executed, causes at least one computer to execute the performing and computing steps described herein, in particular the steps of the methods 800, 900 described above. Such a computer program product may include a readable non-transitory storage medium storing program code thereon for use by a computer. The program code may perform the performing and computing steps described herein, in particular the methods 800, 900 described above.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

The scope of protection shall be defined by the appended claims.

## Claims

1. A client type communication device (110) for communicating with an access point type communication device (120), the client type communication device (110) comprising:
a transceiver unit (111), configured to receive (122) a trigger frame (124) from the access point type communication device (120), the trigger frame (124) indicating a particular portion (126) of time-frequency resources of an uplink frame (200) to be allocated by the client type communication device (110) for uplink transmission of multiple types of control data (300); and
a control unit (113), configured to allocate the indicated portion (126) of time-frequency resources of the uplink frame (200) for uplink transmission of the multiple types of control data (300),
wherein the transceiver unit (111) is configured to transmit (114) the uplink frame (200) comprising the multiple types of control data (300) to the access point type communication device (120);
wherein a particular type of control data (300) includes: information indicating an index (301) of the allocated time-frequency resources, information indicating a number of bits (305) transmitted within the particular type of control data (300) and information indicating the particular type (303).

2. The client type communication device (110) of claim 1,
wherein the particular portion (126) of time-frequency resources of the uplink frame (200) is a portion (203) allocated for a High Efficiency Long Training Field, HE-LTF.

3. The client type communication device (110) of claim 1 or 2,
wherein the trigger frame (124) indicates multiple portions (126) of the time-frequency resources to be allocated for uplink transmission of different types of control data (401, 402, 403, 404, 405); and
wherein the control unit (113) is configured to allocate the indicated multiple portions (126) of the time-frequency resources for uplink transmission of the different types of control data (401, 402, 403, 404, 405).

4. The client type communication device (110) of any one of the preceding claims,
wherein the particular type of control data (300) further includes at least one of:
information indicating single or multiple user transmission (307), and
information indicating contention based or non-contention based allocation (309) of the time-frequency resources.

5. The client type communication device (110) of one of the preceding claims,
wherein the transceiver unit (111) is configured to receive a second trigger frame indicating a particular portion of time-frequency resources of a second uplink frame to be allocated by the client type communication device (110) for uplink transmission of a particular type of control data.

6. The client type communication device (110) of claim 5,
wherein the particular portion of time-frequency resources of the second uplink frame is different from the particular portion (126) of time-frequency resources of the uplink frame (200).

7. The client type communication device (110) of claim 5 or 6,
wherein the particular type of control data of the second uplink frame is different from the particular type of control data (300) of the uplink frame (200).

8. The client type communication device (110) of one of the preceding claims,
wherein a frame structure of the uplink frame (200) is according to an OFDMA technology, in particular according to a WiFi 802.11ax standard.

9. An access point (AP) type communication device (120) for communicating with a client point type communication device (110), the access point type communication device (120) comprising:
a control unit (123), configured to generate a trigger frame (124) indicating a particular portion (126) of time-frequency resources of an uplink frame (200) to be allocated by the client type communication device (110) for uplink transmission of multiple types of control data (300); and
a transceiver unit (121), configured to transmit (122) the trigger frame (124) to the client type communication device (110); and configured to receive (114) the uplink frame (200) comprising the multiple types of control data (300) from the client type communication device (110);
wherein a particular type of control data (300) includes: information indicating an index (301) of the allocated time-frequency resources, information indicating a number of bits (305) transmitted within the particular type of control data (300) and information indicating the particular type (303).

10. The access point type communication device (120) of claim 9,
wherein the particular portion (126) of time-frequency resources of the uplink frame (200) is a portion (203) allocated for a High Efficiency Long Training Field, HE-LTF.

11. The access point type communication device (120) of claim 9
wherein the trigger frame (124) indicates multiple portions (126) of the time-frequency resources to be allocated for uplink transmission of different types of control data (401, 402, 403, 404, 405).

12. The access point type communication device (120) of any one of the preceding claims,
wherein the particular type of control data (300) further includes at least one of:
information indicating single or multiple user transmission (307), and information indicating contention based or non-contention based allocation (309) of the time-frequency resources.

13. The access point type communication device of any one of the preceding claims,
wherein the control unit (123) is configured to generate a second trigger frame indicating a particular portion of time-frequency resources of a second uplink frame to be allocated by the client type communication device (110) for uplink transmission of a particular type of control data;
wherein the transceiver unit (121) is configured to transmit the second trigger frame to the client type communication device (110) and configured to receive the second uplink frame comprising the particular type of control data from the client type communication device (110).

14. The access point type communication device of claim 13,
wherein the particular portion of time-frequency resources of the second uplink frame is different from the particular portion (126) of time-frequency resources of the uplink frame (200).

15. The access point type communication device of claim 13 or 14,
wherein the particular type of control data of the second uplink frame is different from the particular type of control data (300) of the uplink frame (200).

## Patentansprüche

1. Client-Art-Kommunikationsvorrichtung (110) zum Kommunizieren mit einer Zugriffspunktart-Kommunikationsvorrichtung (120), die Client-Art-Kommunikationsvorrichtung (110) umfassend:
eine Sendeempfängereinheit (111), die konfiguriert ist, um einen Triggerrahmen (124) von der Zugriffspunktart-Kommunikationsvorrichtung (120) zu empfangen (122), wobei der Triggerrahmen (124) einen bestimmten Abschnitt (126) von Zeitfrequenzressourcen eines Uplink-Rahmens (200) angibt, der durch die Client-Art-Kommunikationsvorrichtung (110) für eine Uplink-Übertragung mehrerer Arten von Steuerdaten (300) zugewiesen werden soll; und
eine Steuereinheit (113), die konfiguriert ist, um den angegebenen Abschnitt (126) von Zeitfrequenzressourcen des Uplink-Rahmens (200) für die Uplink-Übertragung der mehreren Arten von Steuerdaten (300) zuzuweisen,
wobei die Sendeempfängereinheit (111) konfiguriert ist, um den Uplink-Rahmen (200), umfassend die mehreren Arten von Steuerdaten (300), an die Zugriffspunktart-Kommunikationsvorrichtung (120) zu übertragen (114);
wobei eine bestimmte Art von Steuerdaten (300) beinhaltet: Informationen, die einen Index (301) der zugewiesenen Zeitfrequenzressourcen angeben, Informationen, die eine Anzahl von Bits (305) angeben, die innerhalb der bestimmten Art von Steuerdaten (300) übertragen werden, und Informationen, die die bestimmte Art (303) angeben.

2. Client-Art-Kommunikationsvorrichtung (110) nach Anspruch 1,
wobei der bestimmte Abschnitt (126) von Zeitfrequenzressourcen des Uplink-Rahmens (200) ein Abschnitt (203) ist, der für ein Hocheffizienzlangtrainingsfeld, HE-LTF, zugewiesen ist.

3. Client-Art-Kommunikationsvorrichtung (110) nach Anspruch 1 oder 2,
wobei der Triggerrahmen (124) mehrere Abschnitte (126) der Zeitfrequenzressourcen angibt, die für die Uplink-Übertragung unterschiedlicher Arten von Steuerdaten (401, 402, 403, 404, 405) zugewiesen werden sollen; und
wobei die Steuereinheit (113) konfiguriert ist, um die angegebenen mehreren Abschnitte (126) der Zeitfrequenzressourcen für die Uplink-Übertragung der unterschiedlichen Arten von Steuerdaten (401, 402, 403, 404, 405) zuzuweisen.

4. Client-Art-Kommunikationsvorrichtung (110) nach einem der vorstehenden Ansprüche,
wobei die bestimmte Art von Steuerdaten (300) ferner mindestens eines beinhaltet von:
Informationen, die eine Übertragung eines einzelnen oder mehrerer Benutzer (307) angeben, und
Informationen, die eine konkurrenzbasierte oder nicht konkurrenzbasierte Zuweisung (309) der Zeitfrequenzressourcen angeben.

5. Client-Art-Kommunikationsvorrichtung (110) nach einem der vorstehenden Ansprüche,
wobei die Sendeempfängereinheit (111) konfiguriert ist, um einen zweiten Triggerrahmen zu empfangen, der einen bestimmten Abschnitt von Zeitfrequenzressourcen eines zweiten Uplink-Rahmens angibt, der durch die Client-Art-Kommunikationsvorrichtung (110) für die Uplink-Übertragung einer bestimmten Art von Steuerdaten zugewiesen werden soll.

6. Client-Art-Kommunikationsvorrichtung (110) nach Anspruch 5,
wobei sich der bestimmte Abschnitt von Zeitfrequenzressourcen des zweiten Uplink-Rahmens von dem bestimmten Abschnitt (126) von Zeitfrequenzressourcen des Uplink-Rahmens (200) unterscheidet.

7. Client-Art-Kommunikationsvorrichtung (110) nach Anspruch 5 oder 6,
wobei sich die bestimmte Art von Steuerdaten des zweiten Uplink-Rahmens von der bestimmten Art von Steuerdaten (300) des Uplink-Rahmens (200) unterscheidet.

8. Client-Art-Kommunikationsvorrichtung (110) nach einem der vorstehenden Ansprüche,
wobei eine Rahmenstruktur des Uplink-Rahmens (200) gemäß einer OFDMA-Technologie, insbesondere gemäß einem WLAN-802.11ax-Standard, ist.

9. Zugriffspunkt(AP)-Art-Kommunikationsvorrichtung (120) zum Kommunizieren mit einer Client-Punktart-Kommunikationsvorrichtung (110), die Zugriffspunktart-Kommunikationsvorrichtung (120) umfassend:
eine Steuereinheit (123), die konfiguriert ist, um einen Triggerrahmen (124) zu erzeugen, der einen bestimmten Abschnitt (126) von Zeitfrequenzressourcen eines Uplink-Rahmens (200) angibt, der durch die Client-Art-Kommunikationsvorrichtung (110) für die Uplink-Übertragung mehrerer Arten von Steuerdaten (300) zugewiesen werden soll; und
eine Sendeempfängereinheit (121), die konfiguriert ist, um den Triggerrahmen (124) an die Client-Art-Kommunikationsvorrichtung (110) zu übertragen (122); und konfiguriert ist, um den Uplink-Rahmen (200), umfassend die mehreren Arten von Steuerdaten (300), von der Client-Art-Kommunikationsvorrichtung (110) zu empfangen (114);
wobei eine bestimmte Art von Steuerdaten (300) beinhaltet: Informationen, die einen Index (301) der zugewiesenen Zeitfrequenzressourcen angeben, Informationen, die eine Anzahl von Bits (305) angeben, die innerhalb der bestimmten Art von Steuerdaten (300) übertragen werden, und Informationen, die die bestimmte Art (303) angeben.

10. Zugriffspunktart-Kommunikationsvorrichtung (120) nach Anspruch 9,
wobei der bestimmte Abschnitt (126) von Zeitfrequenzressourcen des Uplink-Rahmens (200) ein Abschnitt (203) ist, der für ein Hocheffizienzlangtrainingsfeld, HE-LTF, zugewiesen ist.

11. Zugriffspunktart-Kommunikationsvorrichtung (120) nach Anspruch 9,
wobei der Triggerrahmen (124) mehrere Abschnitte (126) der Zeitfrequenzressourcen angibt, die für die Uplink-Übertragung unterschiedlicher Arten von Steuerdaten (401, 402, 403, 404, 405) zugewiesen werden sollen.

12. Zugriffspunktart-Kommunikationsvorrichtung (120) nach einem der vorstehenden Ansprüche,
wobei die bestimmte Art von Steuerdaten (300) ferner mindestens eines beinhaltet von:
Informationen, die die Übertragung des einzelnen oder der mehreren Benutzer (307) angeben, und Informationen, die eine konkurrenzbasierte oder nicht konkurrenzbasierte Zuweisung (309) der Zeitfrequenzressourcen angeben.

13. Zugriffspunktart-Kommunikationsvorrichtung nach einem der vorstehenden Ansprüche,
wobei die Steuereinheit (123) konfiguriert ist, um einen zweiten Triggerrahmen zu erzeugen, der einen bestimmten Abschnitt von Zeitfrequenzressourcen eines zweiten Uplink-Rahmens angibt, der durch die Client-Art-Kommunikationsvorrichtung (110) für die Uplink-Übertragung einer bestimmten Art von Steuerdaten zugewiesen werden soll;
wobei die Sendeempfängereinheit (121) konfiguriert ist, um den zweiten Triggerrahmen an die Client-Art-Kommunikationsvorrichtung (110) zu übertragen und konfiguriert ist, um den zweiten Uplink-Rahmen, umfassend die bestimmte Art von Steuerdaten, von der Client-Art-Kommunikationsvorrichtung (110) zu empfangen.

14. Zugriffspunktart-Kommunikationsvorrichtung nach Anspruch 13,
wobei sich der bestimmte Abschnitt von Zeitfrequenzressourcen des zweiten Uplink-Rahmens von dem bestimmten Abschnitt (126) von Zeitfrequenzressourcen des Uplink-Rahmens (200) unterscheidet.

15. Zugriffspunktart-Kommunikationsvorrichtung nach Anspruch 13 oder 14,
wobei sich die bestimmte Art von Steuerdaten des zweiten Uplink-Rahmens von der bestimmten Art von Steuerdaten (300) des Uplink-Rahmens (200) unterscheidet.

## Revendications

1. Dispositif de communication de type client (110) configuré pour communiquer avec un dispositif de communication de type point d'accès (120), le dispositif de communication de type client (110) comprenant :
une unité émettrice-réceptrice (111), configurée pour recevoir (122) une trame de déclenchement (124) provenant du dispositif de communication de type point d'accès (120), la trame de déclenchement (124) indiquant une partie particulière (126) de ressources temps-fréquence d'une trame de liaison montante (200) à attribuer par le dispositif de communication de type client (110) en vue de la transmission de liaison montante de multiples types de données de commande (300) ; et
une unité de commande (113), configurée pour attribuer la partie indiquée (126) des ressources temps-fréquence de la trame de liaison montante (200) en vue de la transmission de liaison montante des multiples types de données de commande (300),
dans lequel l'unité émettrice-réceptrice (111) est configurée pour transmettre (114) la trame de liaison montante (200) comprenant les multiples types de données de commande (300) au dispositif de communication de type point d'accès (120) ;
dans lequel un type particulier de données de commande (300) comporte : des informations indiquant un index (301) des ressources temps-fréquence attribuées, des informations indiquant un nombre de bits (305) transmis dans le type particulier de données de commande (300) et des informations indiquant le type particulier (303).

2. Dispositif de communication de type client (110) selon la revendication 1,
dans lequel la partie particulière (126) des ressources temps-fréquence de la trame de liaison montante (200) est une partie (203) attribuée pour un champ d'apprentissage long de haute efficacité, HE-LTF.

3. Dispositif de communication de type client (110) selon la revendication 1 ou 2,
dans lequel la trame de déclenchement (124) indique plusieurs parties (126) des ressources temps-fréquence à attribuer en vue de la transmission de liaison montante de différents types de données de commande (401, 402, 403, 404, 405) ; et
dans lequel l'unité de commande (113) est configurée pour attribuer les multiples parties indiquées (126) des ressources temps-fréquence en vue de la transmission de liaison montante des différents types de données de commande (401, 402, 403, 404, 405).

4. Dispositif de communication de type client (110) selon l'une quelconque des revendications précédentes,
dans lequel le type particulier de données de commande (300) comporte en outre : des informations indiquant une transmission à un seul ou à plusieurs utilisateurs (307), et/ou
des informations indiquant une attribution basée sur un conflit ou non basée sur un conflit (309) des ressources temps-fréquence.

5. Dispositif de communication de type client (110) selon l'une des revendications précédentes,
dans lequel l'unité émettrice-réceptrice (111) est configurée pour recevoir une seconde trame de déclenchement indiquant une partie particulière des ressources temps-fréquence d'une seconde trame de liaison montante à attribuer par le dispositif de communication de type client (110) en vue de la transmission de liaison montante d'un type particulier de commande les données.

6. Dispositif de communication de type client (110) selon la revendication 5,
dans lequel la partie particulière des ressources temps-fréquence de la seconde trame de liaison montante est différente de la partie particulière (126) des ressources temps-fréquence de la trame de liaison montante (200).

7. Dispositif de communication de type client (110) selon la revendication 5 ou 6,
dans lequel le type particulier de données de commande de la seconde trame de liaison montante est différent du type particulier de données de commande (300) de la trame de liaison montante (200).

8. Dispositif de communication de type client (110) selon l'une des revendications précédentes,
dans lequel une structure de trame de la trame de liaison montante (200) est conforme à une technologie OFDMA, en particulier à la norme WiFi 802.11 ax.

9. Dispositif de communication de type point d'accès (AP) (120) destiné à la communication avec un dispositif de communication de type point client (110), le dispositif de communication de type point d'accès (120) comprenant :
une unité de commande (123), configurée pour générer une trame de déclenchement (124) indiquant une partie particulière (126) de ressources temps-fréquence d'une trame de liaison montante (200) à attribuer par le dispositif de communication de type client (110) en vue de la transmission de liaison montante de multiples types de données de commande (300) ; et
une unité émettrice-réceptrice (121), configurée pour transmettre (122) la trame de déclenchement (124) au dispositif de communication de type client (110) ; et configurée pour recevoir (114) la trame de liaison montante (200) comprenant les multiples types de données de commande (300) provenant du dispositif de communication de type client (110) ;
dans lequel un type particulier de données de commande (300) comporte : des informations indiquant un index (301) des ressources temps-fréquence attribuées, des informations indiquant un nombre de bits (305) transmis dans le type particulier de données de commande (300) et des informations indiquant le type particulier (303).

10. Dispositif de communication de type point d'accès (120) selon la revendication 9,
dans lequel la partie particulière (126) des ressources temps-fréquence de la trame de liaison montante (200) est une partie (203) attribuée pour un champ d'apprentissage long de haute efficacité, HE-LTF.

11. Dispositif de communication de type point d'accès (120) selon la revendication 9,
dans lequel la trame de déclenchement (124) indique plusieurs parties (126) des ressources temps-fréquence à attribuer en vue de la transmission de liaison montante de différents types de données de commande (401, 402, 403, 404, 405).

12. Dispositif de communication de type point d'accès (120) selon l'une quelconque des revendications précédentes,
dans lequel le type particulier de données de commande (300) comprend en outre :
des informations indiquant une transmission à un seul ou à plusieurs utilisateurs (307), et/ou
des informations indiquant une attribution basée sur un conflit ou non basée sur un conflit (309) des ressources temps-fréquence.

13. Dispositif de communication de type point d'accès selon l'une quelconque des revendications précédentes,
dans lequel l'unité de commande (123) est configurée pour générer une seconde trame de déclenchement indiquant une partie particulière des ressources temps-fréquence d'une seconde trame de liaison montante à attribuer par le dispositif de communication de type client (110) en vue de la transmission de liaison montante d'un type particulier de données de commande ;
dans lequel l'unité émettrice-réceptrice (121) est configurée pour transmettre la seconde trame de déclenchement au dispositif de communication de type client (110) et configurée pour recevoir la seconde trame de liaison montante comprenant le type particulier de données de commande provenant du dispositif de communication de type client (110).

14. Dispositif de communication de type point d'accès selon la revendication 13,
dans lequel la partie particulière des ressources temps-fréquence de la seconde trame de liaison montante est différente de la partie particulière (126) des ressources temps-fréquence de la trame de liaison montante (200).

15. Dispositif de communication de type point d'accès selon la revendication 13 ou 14,
dans lequel le type particulier de données de commande de la seconde trame de liaison montante est différent du type particulier de données de commande (300) de la trame de liaison montante (200).
